**Europäisches Patentamt**

**European Patent Office**

**Office européen des brevets**

(19)

(11) Veröffentlichungsnummer: **0 306 721 B1**

# EUROPÄISCHE PATENTSCHRIFT

(12)

(45) Veröffentlichungstag der Patentschrift:
27.02.91 Patentblatt 91/09

(51) Int. Cl.$^5$: **B60T 13/52**

(21) Anmeldenummer: **88113001.7**

(22) Anmeldetag: **10.08.88**

---

(54) **Pneumatischer Bremskraftverstärker.**

(30) Priorität: **14.08.87 DE 8711102 U**
**07.09.87 DE 8712106 U**

(43) Veröffentlichungstag der Anmeldung:
**15.03.89 Patentblatt 89/11**

(45) Bekanntmachung des Hinweises auf die
Patenterteilung:
**27.02.91 Patentblatt 91/09**

(84) Benannte Vertragsstaaten:
**DE ES FR GB IT**

(56) Entgegenhaltungen:
**EP-A- 0 119 880**
**DE-A- 1 526 649**

(73) Patentinhaber: **LUCAS INDUSTRIES public
limited company
Great King Street
Birmingham, B19 2XF West Midlands (GB)**

(72) Erfinder: **Rath, Heinrich Bernhard
Sebastian-Kneipp-Strasse 76a
D-5414 Vallendar (DE)**

(74) Vertreter: **Goetz, Rupert, Dipl.-Ing. et al
Wuesthoff & Wuesthoff Patent- und
Rechtsanwälte Schweigerstrasse 2
D-8000 München 90 (DE)**

**Beschreibung**

Antiblockieranlagen in Kraftfahrzeugen haben üblicherweise einen Rechner, der Raddrehzahlsignale empfängt und zu Druckregelsignalen verarbeitet, die einer Druckmoduliereinheit zugeführt werden. Dieser Rechner wird meist im Motorraum oder auch im Fahrgastraum des Kraftfahrzeugs untergebracht. Bei einer Anordnung im Motorraum ist auch vorgeschlagen worden, den Rechner unmittelbar an der Druckmoduliereinheit zu befestigen, um die elektrischen Verbindungen zwischen beiden zu vereinfachen. Eine solche Anordnung ist jedoch problematisch, da der Rechner durch im Motorraum herrschende Umgebungseinflüsse, beispielsweise vom Motor ausgehende Wärmestrahlung, gestört werden kann. Andererseits ist die Unterbringung des Rechners im Fahrgastraum eines Kraftfahrzeugs ebenfalls in der Regel nicht wünschenswert, vor allem wegen der dann meist langen Leitungen zwischen dem Rechner und der Druckmoduliereinheit.

Entsprechendes gilt auch für weitere Rechner, die zunehmend häufig in Kraftfahrzeuge eingebaut werden, beispielsweise zum Steuern und Überwachen des Motors und/oder Getriebes.

Der Erfindung liegt die Aufgabe zugrunde, einen solchen Rechner in günstiger Lage geschützt unterzubringen.

Die Lösung dieser Aufgabe geht aus von einem pneumatischen Bremskraftverstärker mit einem Gehäuse, dessen Innenraum in bekannter Weise durch mindestens eine bewegliche Zwischenwand in mindestens zwei Kammern unterteilt ist, die an Quellen unterschiedlichen Drucks anschließbar sind. Ein solcher aus dem Document EP-A1-0 119 880 bekannter Bremskraftverstärker ist erfindungsgemäß dadurch weitergebildet, daß mindestens eine der Kammern ein Abteil für einen Rechner aufweist.

Die Unterbringung des Rechners in einer der Kammern eines pneumatischen Bremskraftverstärkers hat mehrere Vorteile. Durch das Gehäuse des Bremskraftverstärkers ist der Rechner gegen mechanische äußere Einwirkung gut geschützt. Zum Schutz des Rechners trägt ferner der in einem pneumatischen Bremskraftverstärker üblicherweise herrschende Unterdruck in der Größenordnung von 0,6 bis 0,8 bar (entsprechend einem Absolutdruck von 0,4 bis 0,2 bar) bei. Verdünnte Luft mit einem Druck in dieser Größenordnung ist bekanntlich ein guter Isolator, so daß der Rechner innerhalb des Gehäuses des Bremskraftverstärkers gut gegen äußere Temperatureinflüsse geschützt ist. Die Luft im Gehäuse üblicher pneumatischer Bremskraftverstärker ist ferner gefiltert und deshalb nahezu staubfrei und enthält auch wenig Feuchtigkeit, so daß der erfindungsgemäß angeordnete Rechner auch insoweit gegen schädliche Einflüsse der äußeren Umgebung geschützt ist.

Bei einer bevorzugten Ausführungsform der Erfindung ist der Rechner in einem Einschubkasten untergebracht, der schubladenartig in das Abteil eingeschoben ist und mit dem Gehäuse des Bremskraftverstärkers eine nach außen abgedichtete Einheit bildet.

Dabei ist es ferner zweckmäßig, wenn der Einschubkasten radial in das Gehäuse eingeschoben ist. Wenn der Bremskraftverstärker in üblicher Weise in ein Kraftfahrzeug eingebaut ist, bleibt er in mindestens einem radial äußeren Bereich gut zugänglich. Wenn das Abteil für den Einschubkasten von einem solchen Bereich ausgeht, läßt sich der Einschubkasten mit dem Rechner besonders leicht auswechseln.

Zweckmäßigerweise ist an das Gehäuse des Bremskraftverstärkers ein Hauptbremszylinder mit Druckmoduliereinheit angebaut, die durch Leitungen mit dem Rechner verbunden ist. Diese Anordnung hat im Zusammenhang mit der Erfindung den Vorteil, daß trotz der geschützten Unterbringung des Rechners die Leitungen, die ihn mit der Druckmoduliereinheit verbinden, besonders kurz sein können.

Wenn der Rechner eine Leistungsendstufe enthält, ist das Abteil, das ihn aufnimmt, vorzugsweise in einer Kammer des Bremskraftverstärkers enthalten, die mittels eines Ventils des Bremskraftverstärkers wahlweise über ein Filter belüftbar oder mit einer Kammer verbindbar ist, die einen Anschluß für eine Vakuumleitung aufweist. Die erstgenannte, wahlweise belüftbare oder evakuierbare Kammer ist bei bekannten pneumatischen Bremskraftverstärkern durch deren Ventil so gesteuert, daß sie im Ruhezustand evakuiert ist und bei jeder Bremsbetätigung belüftet wird. Der in dieser Kammer erfindungsgemäß untergebrachte Rechner wird also bei jeder Bremsbetätigung von frischer, gefilterter Umgebungsluft umspült. Diese Luft nimmt mindestens einem Teil der von der Leistungsendstufe des Rechners entwickelten Wärme auf und wird anschließend an die Bremsbetätigung abgesaugt, so daß ein Wärmestau im Rechner und in dessen Umgebung vermieden wird.

In einer bevorzugten Variante der Erfindung ist vorgesehen, daß eine Wand des Bremskraftverstärkers eine Aussparung aufweist, auf die abdichtend ein Flansch aufgesetzt ist, an dem der Rechner befestigt ist.

Diese Anordnung hat den Vorteil, daß der Rechner auf einer Seite durch das Vakuum im Bremskraftverstärker vor einer Erhitzung durch dort gelegene Wärmequellen (Motor etc.) geschützt ist, während er auf der anderen Seite die in ihm selbst entwickelte Wärme über den Flansch abgeben kann. Der Flansch kann hierzu mit einem die Wärmeabgabe fördernden Profil versehen sein.

Bevorzugt wird die Aussparung in der Wand des Bremskraftverstärkers derart angeordnet, daß der Flansch mit seiner Außenseite nicht im Motorraum, sondern an einer nicht erhitzten Stelle zu liegen kommt, wie z.B. im Fahrgastraum.

Bremskraftverstärker sind üblicherweise mittels Bolzen an einem fahrzeugfesten Bauteil, wie z.B. der Spritzwand, befestigt. Die Bolzen werden in den Bremskraftverstärker durchsetzenden Hülsen geführt. In einer bevorzugten Weiterbildung der Erfindung ist vorgesehen, daß die Verbindungsleitungen zum Rechner in einer derartigen, den Bremskraftverstärker zumindest teilweise durchsetzenden Hülse angeordnet sind.

Ausführungsbeispiele der Erfindung werden im folgenden anhand schematischer Zeichnungen mit weiteren Einzelheiten erläutert. Es zeit :

Fig. 1 einen Teil einer in ein Kraftfahrzeug eingebauten Bremsanlage mit einem erfindungsgemäßen pneumatischen Bremskraftverstärker in einem axialen Schnitt,

Fig. 2 eine Ansicht des Bremskraftverstärkers von vorne, teilweise im Schnitt II-II in Fig. 1, und

Fig. 3 ein weiteres Ausführungsbeispiel eines Bremskraftverstärkers.

Zu der dargestellten Anlage gehört ein Bremskraftverstärker 10 mit einem vorderen Gehäuseteil 12 und einem hinteren Gehäuseteil 14, die miteinander zu einem Gehäuse 12, 14 fest verbunden sind und zwischen sich den äußeren Rand einer elastischen Membran 16 dicht eingespannt halten. Die Membran 16 bildet zusammen mit einer starren Stützplatte 18, an der sie von hinten her anliegt, eine innerhalb des Gehäuses 12, 14 bewegliche Zwischenwand 16, 18. Die Stützplatte 18 umschließt ein Ventil 20, das in einer bei pneumatischen Bremskraftverstärkern üblichen Weise ausgestaltet und deshalb nicht näher dargestellt ist.

Die bewegliche Zwischenwand 16, 18 trennt zwei im Gehäuse 12, 14 angeordnete Kammern 22 und 24 voneinander. Die Kammer 22 ist, bezogen auf die normale Bewegungsrichtung des Fahrzeugs, vorne angeordnet und mit einem Anschluß 26 für eine Vakuumleitung versehen. Die Vakuumleitung selbst ist nicht dargestellt ; sie kann in üblicher Weise mit der Ansaugleitung eines Verbrennungsmotors verbunden sein. Die andere, hintere Kammer 24 ist in Ruhestellung des Ventils 20 mit der vorderen Kammer 22 verbunden und deshalb wie diese evakuiert. In einer Betätigungsstellung des Ventils 20 ist die hintere Kammer 24 hingegen über ein in üblicher Weise im hinteren Bereich des Bremskraftverstärkers 10 angeordnetes Filter 28 mit der Umgebung verbunden.

Zum Steuern des Ventils 20 ist eine Betätigungsstange 30 vorgesehen, die im Einbauzustand des Bremskraftverstärkers 10 mit einem Bremspedal verbunden ist. Zum Abgeben einer durch die Betätigungsstange 30 eingeleiteten und im normalen Betrieb des Bremskraftverstärkers 10 durch einen Druckunterschied zwischen den Kammern 22 und 24 verstärkten Kraft ist eine Kraftabgabestange 32 vorgesehen. Diese reicht von der Stützplatte 18 in das Innere eines Hauptbremszylinders 34, der am Bremskraftverstärker 10 befestigt ist. Zur Befestigung dient ein Paar Bolzen 36, das sich achsparallel durch den Bremskraftverstärker 10 hindurcherstreckt und diesen sowie den Hauptbremszylinder 34 mit der Spritzwand 38 des Kraftfahrzeugs verbindet.

Der Hauptbremszylinder 34 ist in üblicher Weise über eine an ihm befestigte Druckmoduliereinheit 40 mit nicht dargestellten Radbremszylindern verbunden. Die Druckmoduliereinheit hat die Aufgabe, im Hauptbremszylinder 34 erzeugten hydraulischen Druck bei Bedarf derart zu modulieren, daß Blockierzustände der gebremsten Fahrzeugräder vermieden werden.

Das hintere Gehäuseteil 14 hat eine Öffnung 42, die in einem radial äußeren und in Einbaulage oben angeordneten Wandbereich ausgebildet ist. Durch die Öffnung 42 ist ein Abteil 44 in der hinteren Kammer 24 zugänglich. Das Abteil 44 ist nach hinten durch einen ebenen Wandabschnitt des hinteren Gehäuseteils 14, seitlich durch je eine am hinteren Gehäuseteil 14 befestigte oder einstückig ausgebildete Seitenwand 46 und nach unten durch ein Paar schmale Konsolen 48 begrenzt. Das Abteil 44 ist zur Unterbringung eines Rechners 50 bestimmt, der in einem schubladenartigen Einschubkasten 52 aufgenommen ist. Der Einschubkasten 52 ist beim Einschieben in das Abteil 44 durch die Seitenwände 46 geführt und in eingeschobenem Zustand gegen ein Kippen nach vorne dadurch gehalten, daß die Konsolen 48 den unteren Bereich des Einschubkastens hakenartig umgreifen. Nach oben hin ist der Einschubkasten 52 durch einen Flansch 54 begrenzt, der mit Schrauben 56 am hinteren Gehäuseteil 14 befestigt und gegen diesen durch eine Dichtung 58 in Form eines rechteckigen Rahmens abgedichtet ist.

Der Rechner 50 ist durch aus dem Einschubkasten 52 herausgeführte Leitungen 60 zur Übertragung von Signalen mit der Druckmoduliereinheit 40 verbunden.

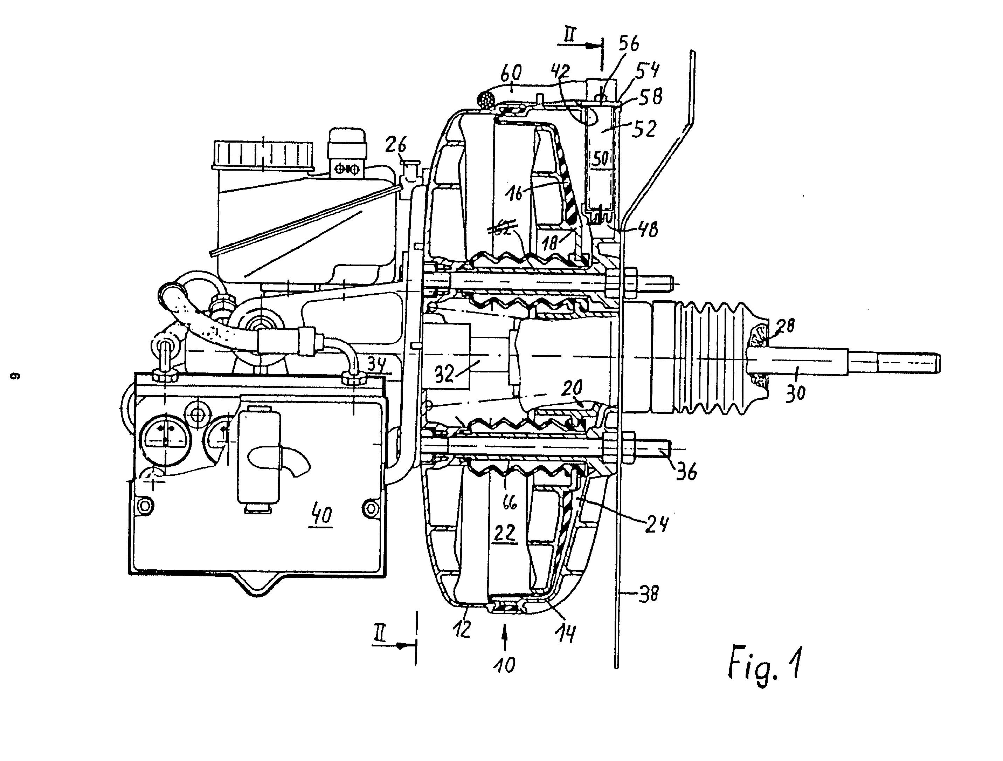

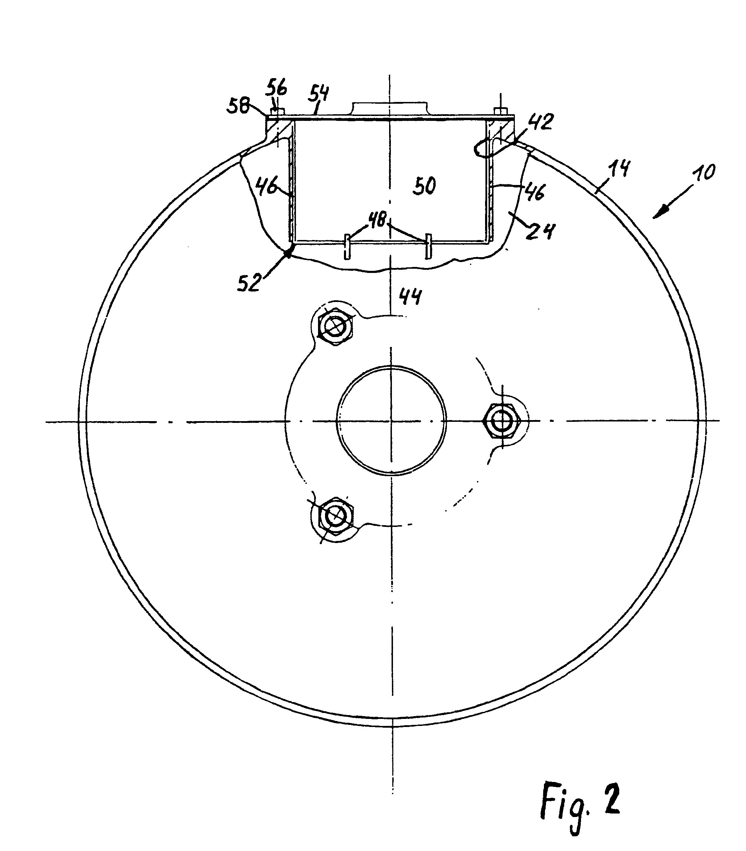

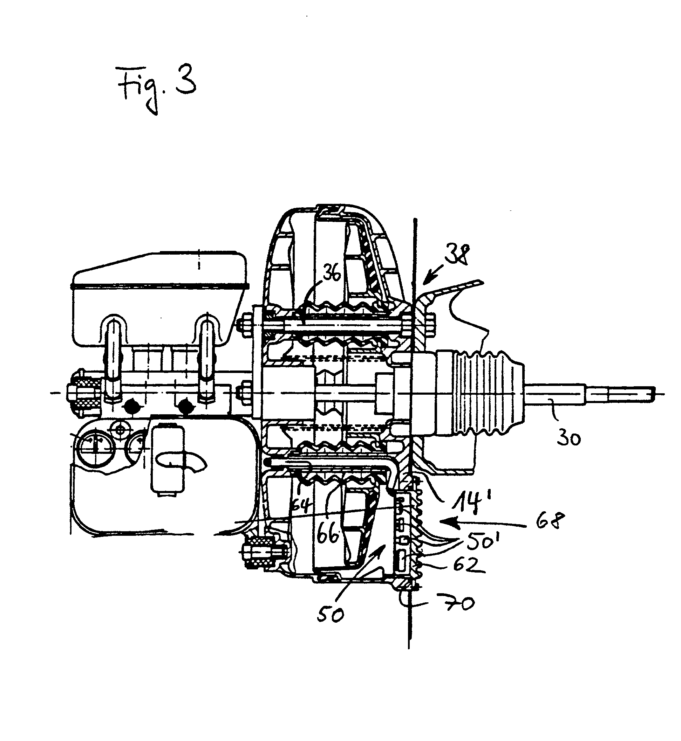

Fig. 3 zeigt ein weiteres Ausführungsbeispiel eines Bremskraftverstärkers mit daran angebrachtem Rechner. Dem Ausführungsbeispiel gemäß den Fig. 1 und 2 entsprechende Bauteile sind mit gleichen Bezugszeichen versehen.

Bei diesem Ausführungsbeispiel weist die Wand 14′ der Kammer 14 eine Aussparung 42 auf, auf die abdichtend ein Flansch 62 aufgesetzt ist. Die Abdichtung erfolgt mittels eines umlaufenden Dichtringes 70. Auf dem Flansch 62 sind die Bauteile 50′ des Rechners 50 mittels einer auswechselbaren Steck-Platine mit gutem Wärmekontakt zum Flansch befestigt.

Wie den Fig. 1 und 3 zu entnehmen ist, wird der Bremskraftverstärker 10 mittels Bolzen 36 an der Spritzwand 38 befestigt. Die Bolzen 36 werden in Hülsen 66 geführt. Üblicherweise dienen vier Bolzen der Befestigung des Bremskraftverstärkers 10. Gemäß Fig. 3 nimmt aber eine der den Bolzen 36 zugeordneten Hülsen 66 statt des Bolzens Verbindungsleitungen 64 zum Rechner 50 auf.

Ein derart auf dem Flansch 62 angeordneter Rechner 50 kann leicht ausgewechselt werden und ist gegen eine unerwünschte Erhitzung durch den Fahrzeugmotor aufgrund des Vakuums im Bremskraftverstärker geschützt. Andererseits wird aber die beim Betrieb des Rechners 50 selbst entwickelte Wärme über den Flansch 62, an dem außenseitig nicht erhitzte Luft mit Atmosphärendruck anliegt, gut abgeführt. Hierzu ist der Flansch 62 außenseitig mit einem die Wärmeabgabe fördernden Profil 68 versehen. Der Flansch 62 kann außenseitig (also mit dem Profil 68) in den Fahrgastraum gerichtet sein. Im übrigen sind beim Ausführungsbeispiel gemäß Fig. 3 auch die anhand der Fig. 1 und 2 beschriebenen, insbesondere die Druckmodulierungseinheit 40 und den Hauptbremszylinder 34 betreffenden Merkmale realisierbar.

## Ansprüche

1. Pneumatischer Bremskraftverstärker (10) mit einem Gehäuse (12, 14), dessen Innenraum durch mindestens eine bewegliche Zwischenwand (16, 18) in mindestens zwei Kammern (22, 24) unterteilt ist, die an Quellen unterschiedlichen Drucks anschließbar sind, dadurch **gekennzeichnet**, daß mindestens eine der Kammern (22, 24) ein Abteil (44) für einen Rechner (50) aufweist.

2. Bremskraftverstärker nach Anspruch 1, dadurch **gekennzeichnet**, daß der Rechner (50) in einem Einschubkasten (52) untergebracht ist, der schubladenartig in das Abteil (44) eingeschoben ist und mit dem Gehäuse (12, 14) des Bremskraftverstärkers (10) eine nach außen abgedichtete Einheit bildet.

3. Bremskraftverstärker nach Anspruch 2, dadurch **gekennzeichnet**, daß der Einschubkasten (52) radial in das Gehäuse (12, 14) eingeschoben ist.

4. Bremskraftverstärker nach einem der Ansprüche 1 bis 3, dadurch **gekennzeichnet**, daß an das Gehäuse (12, 14) des Bremskraftverstärkers (10) ein Hauptbremszylinder (34) mit Druckmoduliereinheit (40) angebaut ist, die durch Leitungen (60) mit dem Rechner (50) verbunden ist.

5. Bremskraftverstärker nach einem der Ansprüche 1 bis 4, dadurch **gekennzeichnet**, daß der Rechner (50) eine Leistungsendstufe enthält und das Abteil (44) in einer Kammer (24) des Bremskraftverstärkers (10) enthalten ist, die mittels eines Ventils (20) des Bremskraftverstärkers (10) wahlweise über ein Filter (28) belüftbar oder mit einer Kammer (22) verbindbar ist, die einen Anschluß (26) für eine Vakuumleitung aufweist.

6. Pneumatischer Bremskraftverstärker (10) mit einem Gehäuse (12, 14), dessen Innenraum durch mindestens eine bewegliche Zwischenwand (16, 18) in mindestens zwei Kammern (22, 24) unterteilt ist, die an Quellen unterschiedlichen Drucks anschließbar sind, dadurch **gekennzeichnet**, daß in einer Wand (14') des Bremskraftverstärkers (10) eine Aussparung vorgesehen ist, auf die abdichtend ein Flansch (62) aufgesetzt ist, an dem ein Rechner (50) befestigt ist.

7. Bremskraftverstärker nach Anspruch 6, dadurch **gekennzeichnet**, daß Verbindungsleitungen (64) zum Rechner (50) in einer den Bremskraftverstärker (10) zumindest teilweise durchsetzenden Hülse (66) angeordnet sind.

8. Bremskraftverstärker nach einem der Ansprüche 6 oder 7, dadurch **gekennzeichnet**, daß der Flansch (62) außenseitig ein wärmeabgabeförderndes Profil (68) aufweist.

## Claims

1. A pneumatic brake booster (10) having a casing (12, 14) whose interior is divided by at least one movable partition (16, 18) into at least two chambers (22, 24), which are adapted to be connected to sources of different pressure, **characterized** in that at least one of the chambers (22, 24) has a compartment (44) for accomodating a computer (50).

2. The brake booster according to claim 1, **characterized** in that the computer (50) is housed in a plug-in module (52) which is inserted in the compartment (44) like a drawer-like fashion and forms an outwardly sealed unit, together with the casing (12, 14) of the brake booster (10).

3. The brake booster according to claim 2, **characterized** in that the plug-in module (52) is inserted radially within the casing (12, 14).

4. The brake booster according to any one of claims 1 to 3, **characterized** in that a master cylinder (34) comprising a pressure control module (40) is mounted on the casing (12, 14) of the brake booster (10) through which the leads (60) of the computer (50) are connected.

5. The brake booster according to any one of claims 1 to 4, **characterized** in that the computer (50) contains a power output stage, ant the compartment (44) is contained in a chamber (24) of the brake booster (10), which by means of a valve (20) of the brake booster (10) is selectively adapted to be ventilated by a filter (28) or to be connected to a chamber (22) having a connection (26) for a vaccum line.

6. A brake booster (10) having a casing (12, 14) whose interior is divided by at least one movable partition (16, 18) into at least two chambers (22, 24) which are adapted to be connected to sources of different pressure, **characterized** in that in one wall (14') of the brake booster (10) a recess is provided onto which a flange (62) is seated sealingly and to which a computer (50) is fastened.

EP 0 306 721 B1

7. A brake booster according to claim 6, **characterized** in that the connection lines (64) to the computer (50) are arranged in a sleeve (66) at least partially passing through the booster (10).

8. The brake pressure booster according to one of claims 6 to 7, **characterized** in that the flange (62) has on its exterior a heat dissipating profile (68).

# Revendications

1. Amplificateur de force de freinage pneumatique (10) comprenant un boîtier (12, 14) dont le volume intérieur est divisé par au moins une cloison intermédiaire mobile (16, 18) en au moins deux chambres (22, 24) qui peuvent être raccordées à des sources possédant des pressions différentes, caractérisé en ce qu'au moins une des chambres (22, 24) présente un compartiment (44) pour un calculateur (50).

2. Amplificateur de force de freinage selon la revendication 1, caractérisé en ce que le calculateur (50) est contenu dans une boîte encastrable (52) qui est encastrée dans le compartiment (44) à la façon d'un tiroir et qui forme avec le boîtier (12, 14) de l'amplificateur de force de freinage (10) une unité qui est isolée de l'extérieur à joint étanche.

3. Amplificateur de force de freinage selon la revendication 2, caractérisé en ce que la boîte encastrable (52) est encastrée radialement dans le boîtier (12, 14).

4. Amplificateur de force de freinage selon une des revendications 1 à 3, caractérisé en ce qu'au boîtier (12, 14) de l'amplificateur de force de freinage (10) est fixé un maître-cylindre de frein (34) comprenant une unité de modulation de la pression (40) qui est reliée au calculateur (50) par des conducteurs (60).

5. Amplificateur de force de freinage selon une des revendications 1 à 4, caractérisé en ce que le calculateur (50) comprend un étage final de puissance et le compartiment (44) est contenu dans une chambre (24) de l'amplificateur de force de freinage (10) qui peut être sélectivement, soit alimentée en air à travers un filtre (28), soit reliée à une chambre (22) qui présente un raccord (26) destiné à recevoir une conduite de dépression, sous l'action d'une soupape (20) de l'amplificateur de force de freinage (10).

6. Amplificateur de force de freinage pneumatique (10) comprenant un boîtier (12, 14) dont le volume intérieur est subdivisé par au moins une cloison intermédiaire mobile (16, 18) en au moins deux chambres (22, 24) qui peuvent être raccordées à des sources possédant des pressions différentes, caractérisé en ce que, dans une paroi (14') de l'amplificateur de force de freinage (10) est prévue une ouverture sur laquelle est monté à joint étanche un flasque (62) auquel est fixé un calculateur (50).

7. Amplificateur de force de freinage selon la revendication 6, caractérisé en ce que des conducteurs de liaison (64) aboutissant au calculateur (50) sont passés dans une douille (66) qui traverse au moins partiellement l'amplificateur de force de freinage (10).

8. Amplificateur de force de freinage selon une des revendications 6 et 7, caractérisé en ce que le flasque (62) présente sur sa face extérieure un profil (68) qui favorise l'évacuation de la chaleur.

Fig. 1

Fig. 2

Fig. 3